# EUROPEAN PATENT APPLICATION

(11) **EP 1 927 966 A1**
(43) Date of publication of application: **04.06.2008**
(21) Application number: 07018015.3
(22) Date of filing: 13.09.2007
(51) Int. Cl.: G09B 19/06

(54) **Phonetics learning method**

(30) Priority: 30.11.2006 CN 200610161130; 24.05.2007 CN 200710105237
(71) Applicant: Su, Wei-Chou, Tainan City (TW)
(72) Inventor: Su, Wei-Chou, Tainan City (TW)
(74) Representative: Volpert, Marcus

(57) **Abstract**

A phonetic learning method includes phonetic symbols, transliteration and an input method, using 26 English alphabets, a dot (16), a line (17), and a slash (18) added on phonetic symbols to indicate six orientations of English vowels. For getting a numeral code for the transliterated English alphabets from Chinese phonetic symbols, English alphabets are added with the numerals on a mobile phone as a numeral code input of a Chinese character. The easy orientation marks enable beginners to make out and pronounce its sound, to learn Chinese more easily, and the simple numeral code input method is easy to use, much like to write with a hand when a user keys in a word, and the orientation numeral codes are easy to memorize.

## Description

### BACKGROUND OF THE INVENTION

### 1. Field of the Invention

This invention relates to a phonetics learning method, particularly to one using dots, lines, strokes marked around a phonetic symbol or an alphabet, and making use of English alphabets and Chinese phonetic symbols for forming a numeral code so that it is very easy to knock the keys of numerals and signs on a mobile phone or a computer to get a Chinese word or an English alphabet. Then it can be applied to learning foreign languages, usable for reading books, dictionaries, reading materials etc.

### 2. Description of the Prior Art

Various phonetic symbols such as KK phonetic symbols, International phonetic signs and natural pronunciation symbols all have to change the pronunciation of an alphabet such as alphabet "a" to sound as "R", alphabet "e" to sound as "A", alphabet "I and i" to sound as "E", as an indefinite change, so it is very doubtful for beginners, who are then unable to read out its correct pronunciation. Thus they can only read silently and write with a hand in learning a new language, very difficult to learn it well. As for Chinese transliterating, there are Romanizing symbols, universal phonetic symbols, etc. very chaotic and lack of consistency. On the other hand, a mobile phone has keys of numerals (0-9), English alphabets (ABC....), and Chinese phonetic symbols 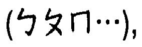 and a computer has many kinds of word explosion methods, and the keys are dazzling in keying in characters, requiring changeover and knocking so as to find a character wanted, just like to search for a treasure.

### SUMMARY OF THE INVENTION

A main objective of the present invention is to offer a coherent phonetic learning method using combination of orientation phonetic signs, orientation transliteration and an orientation input method, including orientation phonetics, orientation transliteration, and an orientation numeral input method.

The orientation phonetic symbols are indicated in the following way.

The English alphabet vowels (a, e, i, o, u) are used, and each vowel is added with six different orientation marks. The first orientation sign (10) is 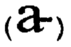 pronounced as 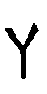 (Chinese phonetics), the second orientation sign (11) is 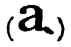 pronounced as 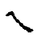 (Chinese phonetics), the third orientation sign (12) is 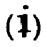 pronounced as 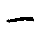 (Chinese phonetics), the fourth orientation sign (13) is 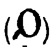 pronounced as 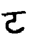 (Chinese phonetics), the fifth orientation sign (14) is 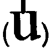 pronounced as 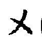 (Chinese phonetic), and the sixth orientation sign (15) is 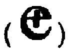 pronounced as 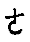 (Chinese phonetic). If any of the five English alphabet vowels is marked with the same one of the six orientation signs, it has the same pronunciation.

Next, if a dot (16), a line (17) or a slash (18) is added on an English alphabet, it indicates respectively a long sound, a short sound or a strong sound.

Next, if a dot (16), a line (17) or a slash (18) added on an English alphabet, it indicates respectively a pictographic sound or 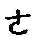 (Chinese phonetic) sound.

A long or a short underline (20) under two English alphabets indicates respectively a long sound or a short sound.

A delete line (21) on an English alphabet indicates the alphabet not to be pronounced.

A space area (22) indicates that the syllables of an English word are divided.

A vertical line (23) in the middle of an English alphabet indicates that the alphabet has two sounds.

An original-sound line (24) on the beginning point of an English alphabet indicates that the alphabet is pronounced as its original sound.

A reverse arrow (25) under two alphabets indicates that the two English alphabets are pronounced reversely.

The numerical input method of the phonetic learning method in the invention is to use English alphabets and numerals and sign keys for forming numerical codes, and its method is described as below.

At first a Chinese phonetic sign or character is transliterated into English alphabets, and then the beginning point and the ending point of the writing small letters of the English alphabets are combined with twelve numerals and signs on the faceplate to make up the numeral code of the Chinese sign or character. This is the basic principle of coding a Chinese phonetic or character.

If the set numeral is keyed once, the English alphabet appeared is a small letter.

If the set numeral is keyed twice quickly, the English alphabet appeared is a large letter.

If the same key is keyed in thrice, the numeral of the key appears.

The 0 key is used for making a space between words.

The function key 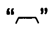 (37) is used for changing the kind of language.

It is ruled that Chinese transliteration is performed by English alphabets, and the numerals and signs of the keyboard are the numbers used for making numeral codes of the Chinese phonetics and characters.

The 0 key of a mobile phone or the blank key of a computer keyboard is set to indicate the first tone of a Chinese phonetic or character, the 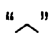 key (33) of a mobile phone or the "2"key of a computer keyboard a second tone thereof, the ">" key (34) of a mobile phone or the "3" key of a computer keyboard a third tone thereof, the 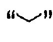 key (35) of a mobile phone or the "4"key of a computer keyboard the fourth tone thereof, and the "<" key (36) of a mobile phone or the "5" key of a computer keyboard a soft tone thereof, for reducing frequency of using letter keys.

The pronunciation can be heard while keying in a numeral code, and a whole sentence can be heard after knocking on "●"(38) key at the end, helpful for the handicapped to hear, speak, read and write.

The Chinese phonetic notations are transliterated with English alphabets and the formatted with the numeral codes that are coded with simply as can be without any numeral repeated.

As for those Chinese phonetic notations transliterated with more than two English alphabets, their numeral codes are made up by taking the first numeral of the first alphabet and the last numeral of the last alphabet.

### BRIEF DESCRIPTION OF DRAWINGS

This invention will be better understood by referring to the accompanying drawings, wherein:
Figure 1 is a view of an orientation sign of a vowel of English alphabets in the present invention;
Figure 2 is a view of an orientation sign of a vowel of English alphabets with a dot, a line and a slash added thereon in the present invention;
Figure 3 is pictographic phonetics with a sign on an English alphabet in the present invention;
Figure 4 is phonetics with an underline under two English alphabets in the present invention;
Figure 5 is a phonetic with a delete line on a single alphabet of an English word in the present invention;
Figure 6 is a view of a space dividing the spellings of an English word in the present invention;
Figure 7 is a view of a vertical middle line on an English alphabet in the present invention;
Figure 8 is view of a phonetic with an original-sound line on the beginning point of an English alphabet to show that the alphabet is to be pronounced as its original sound in the present invention;
Figure 9 is a view of a phonetic with a reverse arrow under two English alphabets to show that the two alphabets are to be pronounced reversely in the present invention;
Figure 10A is a table of the orientation phonetics for English alphabets in the present invention;
Figure 10B is another table of the orientation phonetics for English alphabets in the present invention;
Figure 10C is one more table of the orientation phonetics for English alphabets in the present invention;
Figure 11 is an upper view of the numeral and function keys of a conventional mobile phone in the present invention;
Figure 12A is a table of input numerals for English capital letters, English small letters, their Chinese transliterations and common signs in the present invention;
Figure 12B is another table of input numerals for English capital letters, English small letter, their Chinese transliterations and common signs in the present invention;
Figure 13 is a table of English alphabets displayed on the numeral keys of a mobile phone in the present invention;
Figure 14 is a table of numeral codes for numerals in the present invention; and,
Figure 15 is a table showing examples of different languages coded with numerals according to the method in the present invention.

### DETAILED DESCRIPTION OF THE PREFERRED EMBODIMENT

The phonetic learning method in the present invention includes an orientation phonetic, an orientation transliteration and an orientation numeral input method to be used for learning a language and of keying-in English alphabets, numerals and sings.

The concise feature of the orientation phonetics is like that of a map orientation, with the upper side being north, with the left side being west, so forth, with all directions on a map is very clear. Therefore, no matter what the vowel is, the vowel has a definite sound by means of six orientations of the upper side, the lower side, the left lower side, the right side, the right lower side, and the middle of the vowel using a dot indicating a short sound, a line indicating a long sound, or a slash indicating a strong sound for representing the exclusive sound the vowel has, and further a delete line added on the vowel indicating no pronunciation, a cut line indicating two sounds for showing pronunciation change of an alphabet. Thus different orientations indicate different sounds, and the orientation indicates the alphabet how to be pronounced, so a reader may easily speak out correctly the alphabet, boosting reading capacity.

Next, how to mark the orientation phonetics will be described as follows.

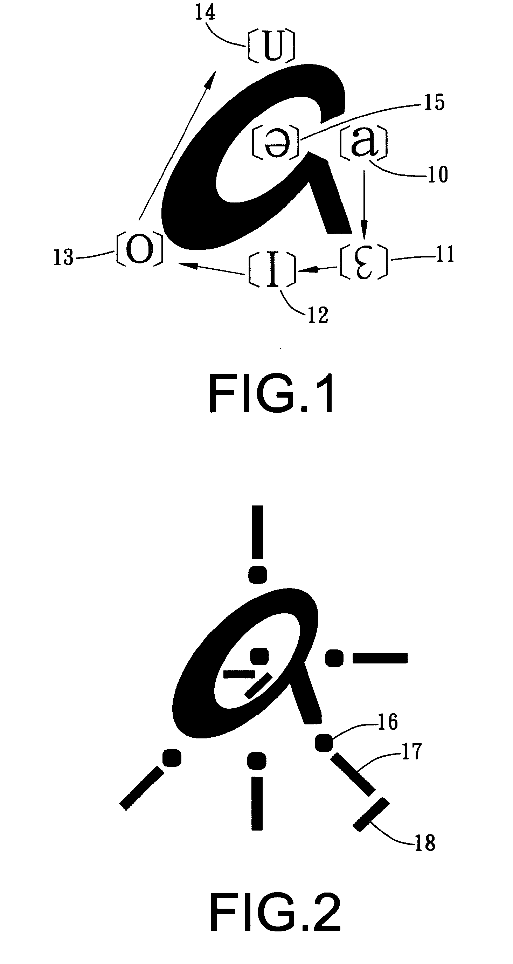

Five English alphabet vowels "a", "e", "i", "o" "u" are used, in addition to six orientation marks placed on a vowel to indicate how the vowel to be pronounced, as shown in Fig. 1.

The first orientation mark (10) is 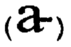 pronounced as Y (Chinese phonetics), the second orientation mark (11) is 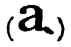 pronounced as 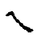 (Chinese phonetics), the third orientation mark (12) is 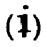 pronounced as - (Chinese phonetics), the fourth orientation mark (13) is 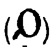 pronounced as 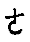 (Chinese phonetics), the fifth orientation mark (14) is 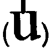 pronounced as 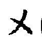 (Chinese phonetics), and the sixth orientation mark (15) 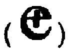 pronounced as 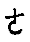 (Chinese phonetics). If the same orientation mark is added on any vowel, the vowel has the same pronunciation as the other vowels having the same orientation mark.

A dot, a line and a slash added on an English alphabet indicate respectively a long sound, a short sound and a strong sound, and the short sound is indicated by the dot (16), the long sound by the line (17), and the strong sound by the slash (18), as shown in Fig. 2.

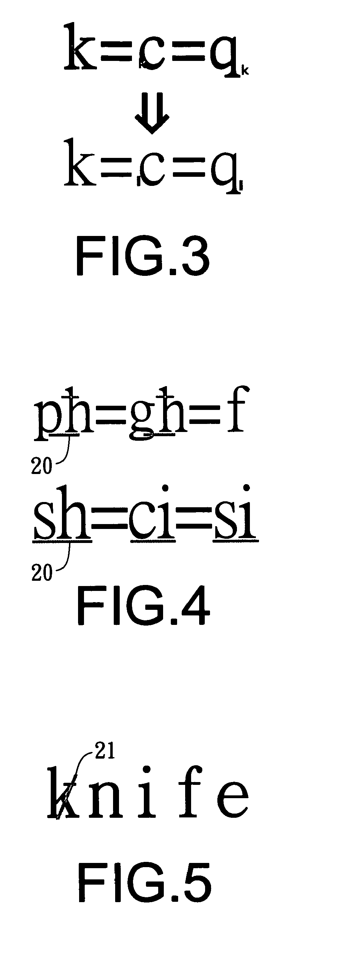

A dot, a line and a slash added on an English alphabet indicate respectively pictographic sound and 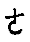 (Chinese phonetics) sound as shown in Fig. 3.

A long underline and a short underline (20) under two alphabets indicate respectively a long sound and a short sound of the two alphabets, as shown in Fig. 4.

An inclined delete line (21) added on an alphabet indicates that the alphabet is not pronounced, with the last e not to be added with the delete line, as shown in Fig. 5.

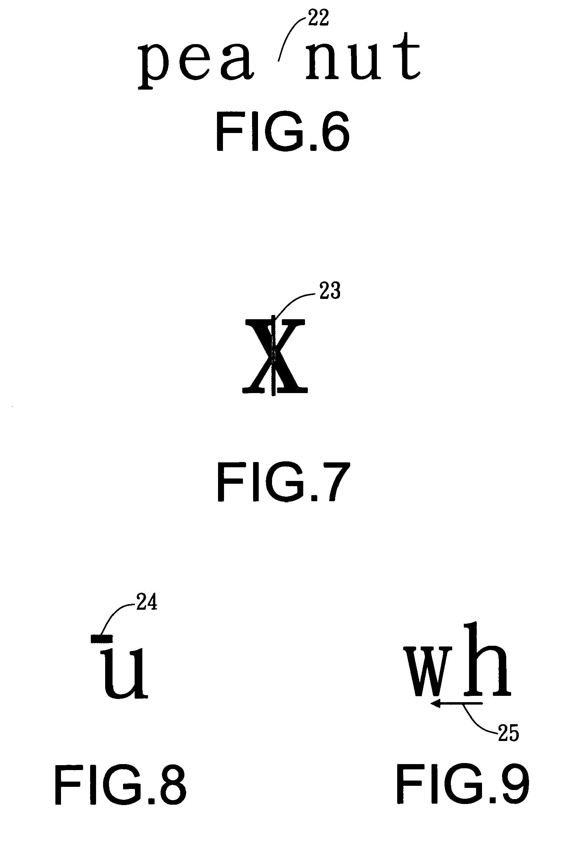

A space area (22) indicates the spelling of a word is divided, as shown in Fig. 6.

A vertical line (23) added on the middle of an alphabet indicates that the alphabet has two sounds, as shown in Fig. 7.

An original-sound line (24) added on the beginning point of an alphabet indicates that the alphabet is pronounced as its original sound, as shown in Fig. 8.

A reverse arrow ← (25) added under two alphabets indicates that the two alphabets are to be pronounced reversely, as shown in Fig. 9.

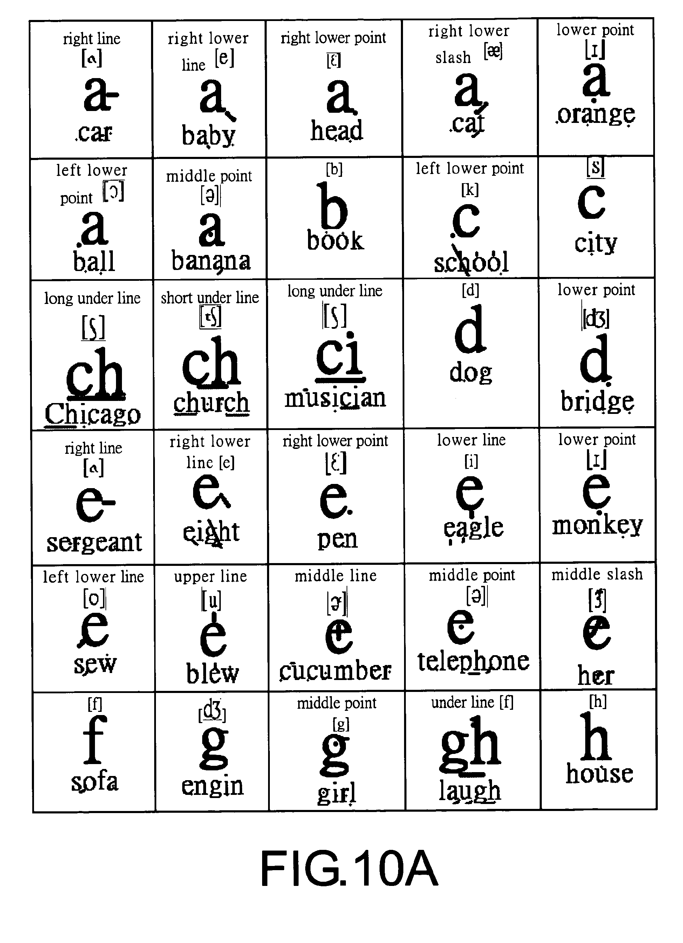

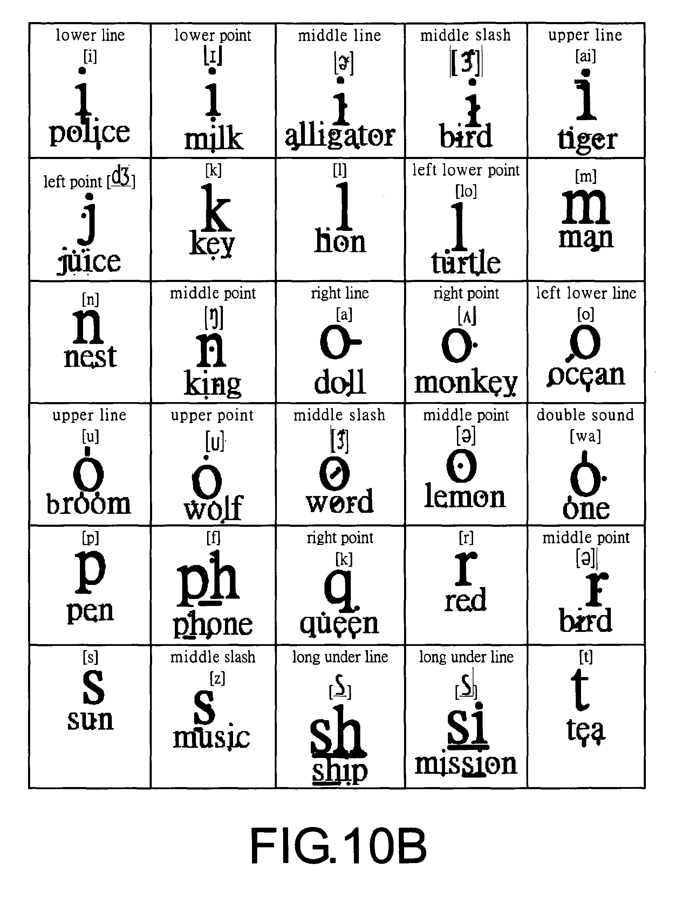

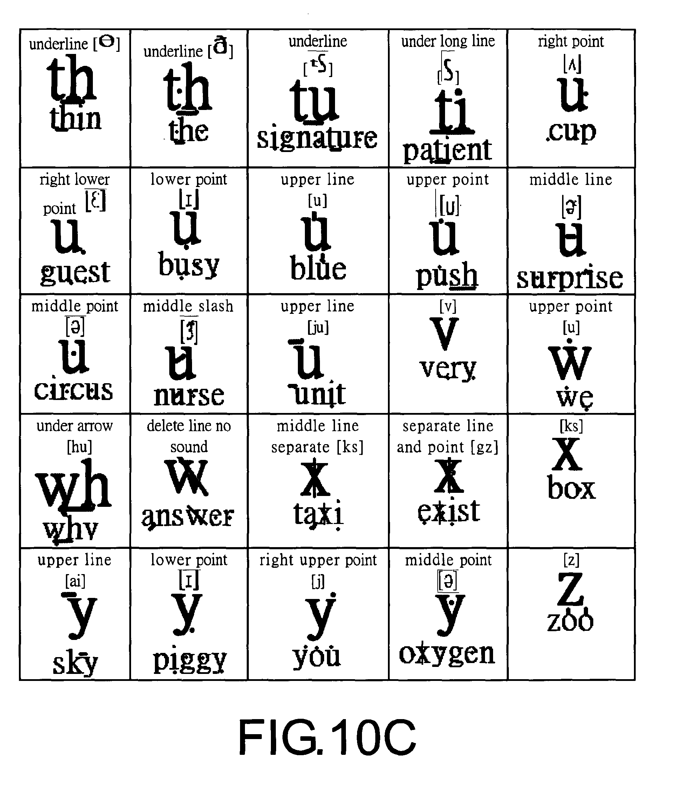

As described just above, this invention makes use of a dot, a line and a slash added on an alphabet at different orientations, and Figs. 10A, 10B and 10C show practical examples of 26 English alphabets added with the orientations.

The orientation phonetics can be used by beginners in notebooks, posters, dictionaries, etc. and its learning requires only a few hours, easily acquired by self-taught, with the orientation phonetics being simple to be learned to know correct pronunciation of words.

Next, the orientation numeral input method is to be described below.

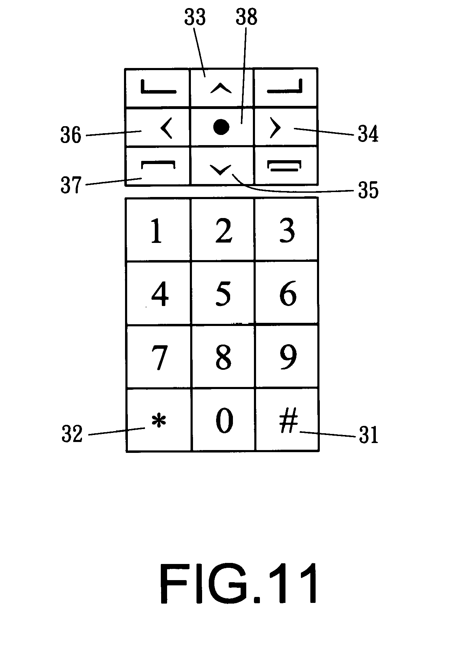

At first various languages are transliterated into English alphabets, finding out the numerals of the alphabets and directly knocking numeral keys "0 - 9", and signs "#" (31) and (*) (32) on the faceplate of a mobile phone, as shown in Fig. 11.

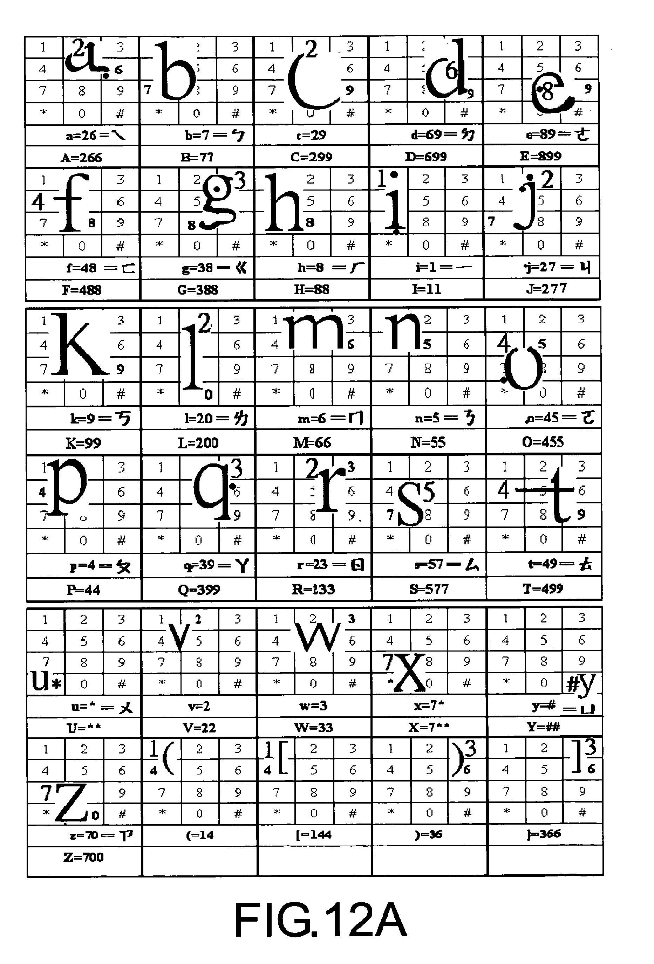

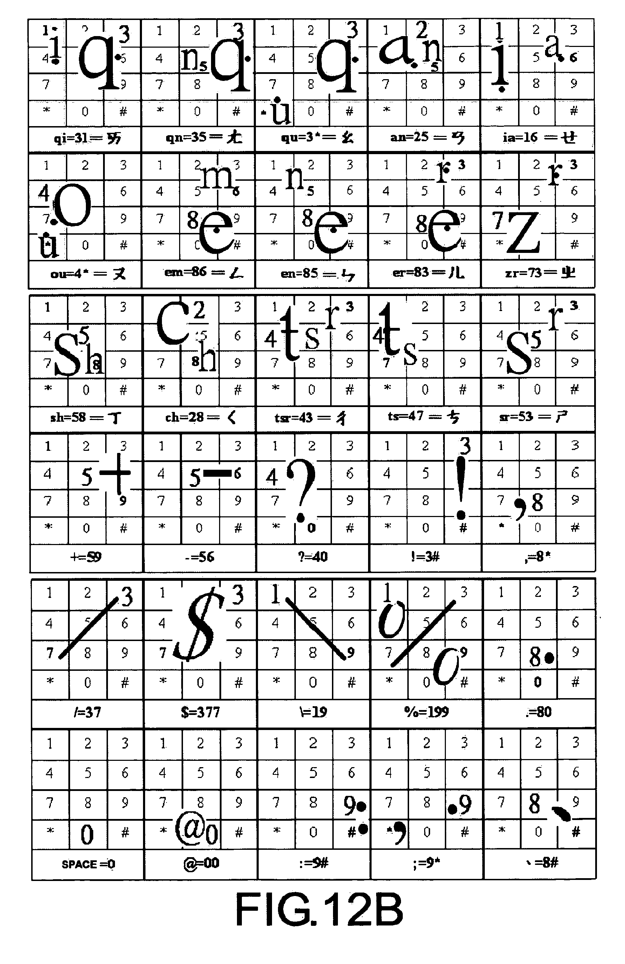

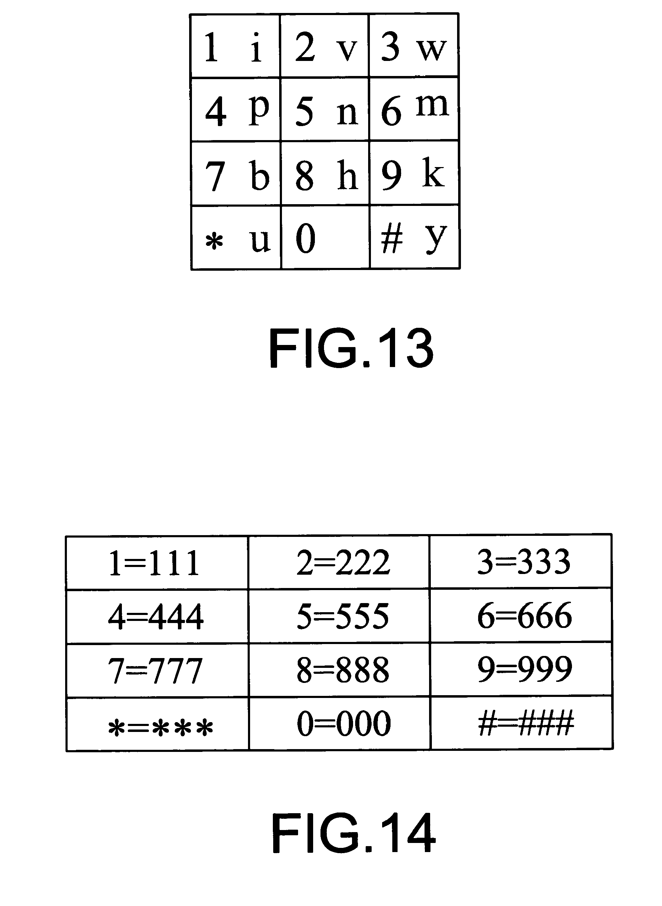

The basic principle is to use twelve numerals and signs on the faceplate of a mobile phone combined with the beginning point and the ending spot of an English written alphabet, as shown in Figs. 12A and 12B. For example, it is enough to knock the key 2 representing the beginning point and the key 6 representing the ending spot, if English alphabet a is wanted to key in a mobile phone, as the numeral code of the alphabet a is 26. However, if the alphabet has its beginning point located at the key 1, 1 is not needed to be keyed in, and only its ending point is needed to be keyed in. For example, the alphabet b has a beginning point 1 and its ending point is 7, so only the key 7 is needed to be keyed in to get the alphabet b. Fig. 13 shows English alphabets represented by a single numeral, and the other alphabets are coded into numerals based on the basic principle described above. However, a user can use this input method applied on any input appliances with twelve keys for writing out English alphabets according to the user's habit. The twelve keys can be like those, 7, 8, 9, U, I, O, J, K, L, M, <, > on a notebook computer, operable as the same as those on a mobile phone.

A single knocking a numeral code can get a small-letter English alphabet, as shown in Fig. 13.

Quick double knocking a numeral code can display a capital-letter English alphabet. If the alphabet "A" is wanted, only knock twice quickly the numeral code of the writing small letter "a", or the beginning point 2 and the ending point 6, and then the small letter "a" is got. But if the ending point 6 is knocked quickly twice, then the capital letter "A" is to be got, as its numeral code is 266. The detailed numeral codes for the English alphabets, phonetics symbols and commonly used signs are found in Figs. 12A and **12B****.**

Next, if a same numeral key is knocked thrice quickly, the numeral itself is got, as shown in Fig. 14.

The 0 key on a mobile phone or a space key on a computer keyboard represents a first tone in Chinese, the key 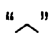 (33) on a mobile phone or the key 2 on a computer keyboard a second tone in Chinese, the key ">" (34) on a mobile phone or the key 3 on a computer keyboard a third tone in Chinese, the key 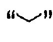 (35) on a mobile phone or the key 4 on a computer keyboard a fourth tone in Chinese, the "<" key ( 36) on a mobile phone or the key 5 on a computer keyboard a soft tone in Chinese, as shown in Fig. 11. Thus, keys are less frequently used for obtaining an English alphabet, with the numeral code of the English alphabets used for keying in Chinese characters, as shown in Figs. 12A and 12B.

The key 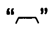 (37) on a mobile phone can be set as a changeover key for languages as shown in Fig. 11, and the key 0 can be set for making a space, depending on a practical use, enabling Chinese, English, signs and numerals to be keyed in at the same time.

The pronunciation can be heard while keying in a numeral code, and a whole sentence can be heard after knocking on the key "●"(38) at the end as shown in Fig. 11, helpful for the handicapped to hear, speak, read and write.

Further, a numeral code table of English alphabets for transliteration of Chinese phonetics symbols is figured out in Figs. 12A and 12B. The Chinese phonetic symbol 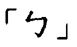 is transliterated into English alphabet "b", and its numeral code is 7. The Chinese phonetic symbol 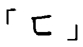 is transliterated into English alphabet "f", and its numeral code is 48. If there are more than two English alphabets, the numeral code is made up of a first numeral of the first alphabet and the last numeral of the last alphabet. For example, the Chinese phonetic symbol 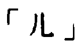 is transliterated into English alphabets "er", and its numeral code is 83, as the first numeral of the first alphabet is 8 and the last numeral of the last alphabet is 3. The Chinese phonetic symbol 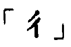 is transliterated into English alphabets "tsr", and its numeral code is 43, as the first numeral of the first alphabet is 4 and the last numeral of the last alphabet is 3, with the middle alphabet "s" not coded. The Chinese phonetic symbol 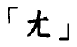 is transliterated into English "qn", and its numeral code is 35, as its first numeral of the first alphabet is 3 and the last numeral of the last alphabet is 5. The Chinese phonetic symbol 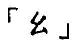 is transliterated into English "qu", and its numeral code is 3*, as its first numeral of the first alphabet is 3, and the last numeral of the last alphabet is *. And the rest can be figured out in the same way, and the detailed numeral codes are shown in Figs. 12A and 12B. So if a mobile phone or a computer has not the Chinese input method, the English alphabets or the numerals can be used alternately.

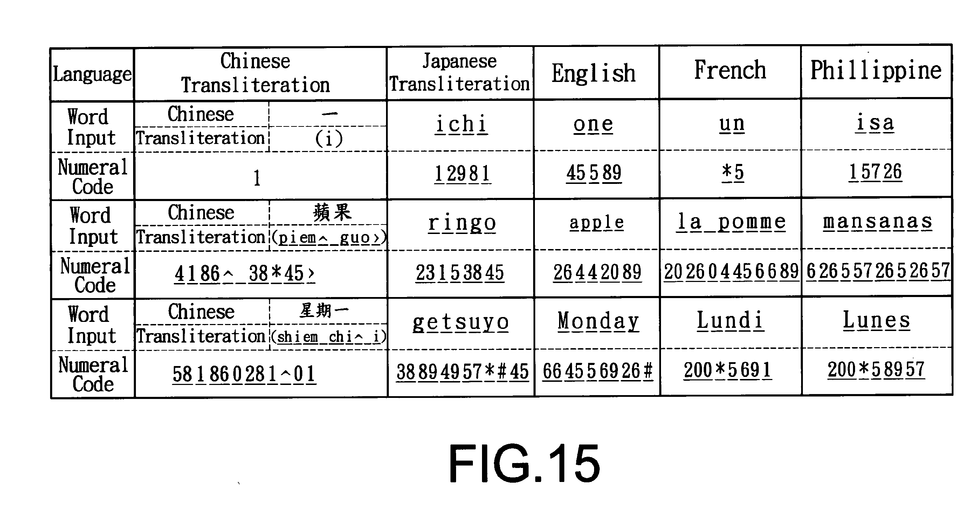

Further, languages spoken all over the world can be retrieved by the numeral input method, as long as they can be transliterated in accordance with rules or methods, as shown in Fig. 15. For example, it needs to knock 30 times on the keys of a conventional mobile phone to get an English phrase of "Good morning !", but merely 22 times by the numeral input method of the present invention without need to focus on the screen to look for characters, and for Chinese phrase 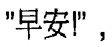 a user has to knock 15 times on the keys of the conventional mobile phone by inputting Chinese phonetic symbols but merely 11 times by the numeral input method of the present invention via transliterating the Chinese phonetics symbols 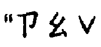 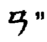 " into "tsqu> an!." As for Japanese "ohayo"(Good morning), it can be coded with 45826#453#". In the future, some functions such as characters commonly used or phrases optioned by users themselves may be added in the present invention so that knocking times can be lessened effectively and it is more easily used. The numeral input method according to the present invention is quite easy to memorize, permitting keying in characters to seem like hand writing, and the handicapped can key in with only one finger, with knocking times lessened effectively. In addition, audio function enables a user not need to look at the screen. The Chinese transliteration combined with the input numeral code of English alphabets can permit the feature of the Chinese phonetics realized, and the Chinese pronunciation is transliterated accurately, permitting the method easily understood, impossible to be confused. Therefore, the Chinese transliteration and the numeral input method are effectively combined with the input method of a mobile phone, not complicating the use of the keys.

While the preferred embodiment of the invention has been described above, it will be recognized and understood that various modifications may be made therein and the appended claims are intended to cover all such modifications that may fall within the spirit and scope of the invention.

## Claims

1. A phonetic learning method comprising:
an orientation phonetic indicating method to let each of the English alphabet vowels "a", "e", "i", "o", "u" have one of six orientations marks, a first orientation mark being (10) 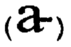 pronounced as Y (Chinese phonetics), a second orientation mark being (11) 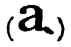 pronounced as 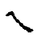 (Chinese phonetics), a third orientation mark being (12) 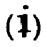 pronounced as - (Chinese phonetics), the fourth orientation mark (13) 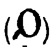 pronounced as 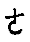 (Chinese phonetics), a fifth orientation mark being (14) 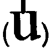 pronounced as 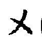 (Chinese phonetics), a sixth orientation mark (15 ) 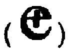 being pronounced as 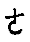 (Chinese phonetics), any vowel with a same orientation mark having a same pronunciation;
a dot (16), a line (17) or a slash (18) added on a vowel respectively indicating that said vowel has a long sound, a short sound or a strong sound, with the dot (16) indicating a short sound, with the line (17) indicating a long sound, and with the slash (18) indicating a strong sound;
a dot (16), a line (17) and a slash (18) added on a vowel respectively indicating a pictographic sound and a 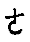 (Chinese phonetics) sound;
a long and a short underline (20) under two English alphabets indicating that the two alphabets have a long and a short sound respectively;
a delete line (21) added on an English alphabet indicating that the alphabet is not pronounced;
a space area (22) indicating that the syllables of an English word are divided;
a vertical line (23) on a middle of an English alphabet indicating that the alphabet has two sounds;
an original-sound line (24) on a first stroke of an English alphabet indicating that the alphabet has its original sound; and,
a reverse arrow (25) under two English alphabets indicating that the alphabets have a reverse sound.

2. A phonetic learning method comprising:
an input numeral code method using English alphabets, numerals and signs on a keyboard for coding a Chinese character, including steps of:
a Chinese word transliterating into English alphabets, a beginning point and an ending point of small letters of said English alphabets combined with twelve numerals and signs on a faceplate of a keyboard and then coded into a numeral code;
an English alphabet of a small letter got if said numeral code is knocked once;
an English alphabet of a capital letter got if said numeral code is knocked quickly twice;
a numeral got if a same key is knocked thrice;
a space between alphabets got if a 0 key is knocked;
a function key 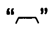 (37) set as a changeover key of languages;
English alphabets used as transliteration of the pronunciation of a Chinese word, and numerals and signs on a keyboard used as numeral codes of a transliterated Chinese word;
a key 0 of a mobile phone or a space key on a computer keyboard set to indicate a first tone of Chinese pronunciation, a key 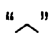 (33) on a mobile phone or a key 2 on a computer keyboard set to indicate a second tone of Chinese pronunciation, a key ">" (34) on a mobile phone or a key 3 on a computer keyboard set to indicate a third tone of Chinese pronunciation, a key 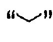 (35) on a mobile phone or a key 4 on a computer keyboard set to indicate a fourth tone in Chinese pronunciation, a key "<" ( 36) on a mobile phone or a key 5 on a computer keyboard set to indicate a soft tone of Chinese pronunciation, thus keys used less frequently;
sound given out when a key is knocked, a whole sentence sounded out when a key **"●"** (38) is knocked, thus the handicapped helped to hear, speak, read and write accordingly;
Chinese phonetic symbols transliterated into corresponding English alphabets, said "English alphabets formed into a numeral code, said numeral code having no numeral repeated; and,
a first numeral of a first English alphabet and a last numeral of a last alphabet combined to be used as a numeral code when there are more than two English alphabets corresponding to a Chinese word transliterated.
